# EUROPÄISCHE PATENTANMELDUNG

(11) **EP 1 709 941 A1**
(43) Veröffentlichungstag der Anmeldung: **11.10.2006**
(21) Anmeldenummer: 06006207.2
(22) Anmeldetag: 25.03.2006
(51) Int. Cl.: A61C 19/00, A61C 13/12, B08B 15/04, B23Q 11/00, B25B 11/00

(54) **Absaugwanne für Werkstoffbearbeitungsmaschinen, insbesondere für Dentalfräsgeräte**

(30) Priorität: 08.04.2005 DE 102005016531
(71) Anmelder: Georg Schick Dental GmbH, 88433 Schemmerhofen (DE)
(72) Erfinder: Birk, Hubert, 88487 Mietingen (DE)
(74) Vertreter: Dziewior, Joachim

(57) **Zusammenfassung**

Die Absaugwanne ist vorgesehen für werkstoffbearbeitungsmaschinen, insbesondere für Dentalfräsgeräte, und weist eine Aufspannplatte (1) zur Auflage und Befestigung auf dem Maschinentisch der Werkstoffbearbeitungsmaschine sowie eine an die Aufspannplatte (1) angeschlossene Wanne (2) auf, in deren Innerem eine Auflageplatte (3) angeordnet ist, die funktionell die Aufgabe des Maschinentischs übernimmt. Zwischen dem Boden der Wanne (2) und der Auflageplatte (3) ist ein Absaugspalt (4) gebildet, der mit einem an der Absaugwanne außenseitig angeordneten, zum Anschluß an eine Absaugeinrichtung eingerichteten Absaugstutzen (5) in Verbindung steht.

## Beschreibung

Die Erfindung betrifft eine Absaugwanne für Werkstoffbearbeitungsmaschinen, insbesondere für Dentalfräsgeräte.

Bei der Bearbeitung hochfester Materialien, insbesondere Keramik oder entsprechender Metalle z. B. Titan, ist es einerseits erforderlich, die Bearbeitungswerkzeuge, insbesondere Fräser und deren Diamanten zu kühlen, aber auch dafür zu sorgen, dass der entstehende feine Staub, der teilweise gesundheitsgefährdend ist, nicht in die Atemluft gerät. Daher erfolgt die Bearbeitung in der Regel unter Zugabe von Wasser, das einerseits die angestrebte Kühlwirkung besitzt und darüberhinaus auch den entstehenden Schleifstaub bindet. Da bei der Bearbeitung der angesprochenen Materialien in der Regel mit sehr hohen Drehzahlen gearbeitet wird, führt dies jedoch auch dazu, dass das zur Kühlung eingesetzte Wasser vernebelt wird, wodurch wiederum die Gefahr besteht, dass an die Nebeltröpfchen gebundene Partikel der bearbeiteten Materialien eingeatmet werden können.

Der Erfindung liegt daher die Aufgabe zugrunde, eine Absaugwanne zu schaffen, die nicht nur das entstehende Tropfwasser aufnimmt, sondern darüber hinaus die entstehende Nebelbildung beseitigt.

Eine diese Aufgabe lösende Absaugwanne ist gekennzeichnet durch eine Aufspannplatte zur Auflage und Befestigung auf dem Maschinentisch der Werkstoffbearbeitungsmaschine sowie durch eine an die Aufspannplatte angeschlossene Wanne, in deren Innerem eine Auflageplatte angeordnet ist, die funktionell die Aufgabe des Maschinentisches übernimmt, wobei zwischen dem Boden der Wanne und der Auflageplatte ein Absaugspalt gebildet ist, der mit einem an der Absaugwanne außenseitig angeordneten, zum Anschluß an eine Absaugeinrichtung eingerichteten Absaugstutzen in Verbindung steht.

Der durch die Erfindung erreichte Vorteil besteht im wesentlichen darin, dass über dem Absaugspalt in unmittelbarer Nähe des Bearbeitungsortes, an dem sowohl der Schleifstaub entsteht als auch das zur Kühlung eingesetzte Wasser vernebelt wird, eine weitgehend quantitative Absaugung über den Absaugspalt erfolgt, was darüber hinaus den Vorteil hat, dass die Sicht auf das zu bearbeitende Objekt frei bleibt und auch die unmittelbare Umgebung des Arbeitsplatzes keine Verschmutzung erfährt.

In besonders vorteilhafter und daher im Rahmen der Erfindung bevorzugter Ausgestaltung ist die Auflageplatte planparallel zur Aufspannplatte ausgerichtet. Dies bedeutet im Ergebnis, dass die Bearbeitungsmaschine in unveränderter Weise verwendet werden kann, wobei lediglich der zu bearbeitende Gegenstand um die Distanz zwischen der Aufspannplatte und der Auflageplatte angehoben ist.

Um zu verhindern, dass noch benötigte, in die Wanne fallende Teile über den Absaugspalt abgesaugt werden, ist im Rahmen der Erfindung vorgesehen, dass der Absaugspalt mit einem Trenngitter versehen ist.

Weiter ist vorgesehen, dass die Aufspannplatte ein sich zur Auflageplatte hin konisch verjüngendes Distanzstück aufweist, auf dem die Auflageplatte befestigt ist und das einen ringförmigen Absaugraum bildet. Hierdurch wird eine sehr effektive Absaugung um die gesamte Auflageplatte herum erreicht.

Um die Handhabung und die Bearbeitung trotz des Einsatzes der Absaugwanne nicht zu beeinträchtigen, ist im Rahmen der Erfindung vorgesehen, dass die Wanne mit wenigstens einer eine Armmulde bildenden Randaussparung versehen ist.

Grundsätzlich kann für die Absaugung eine übliche Absaugvorrichtung vorgesehen sein, die allerdings für die Aufnahme von Wasser eingerichtet sein muss. Dies ist häufig - gerade im Dentallabor - nicht gegeben, so dass es sich weiter empfiehlt, dass zwischen dem Absaugstutzen und der Absaugeinrichtung ein Wasserabscheider angeordnet ist. Dadurch können übliche Absaugeinrichtungen weiter Verwendung finden.

Im folgenden wird die Erfindung an einem in der Zeichnung dargestellten Ausführungsbeispiel näher erläutert; es zeigen:

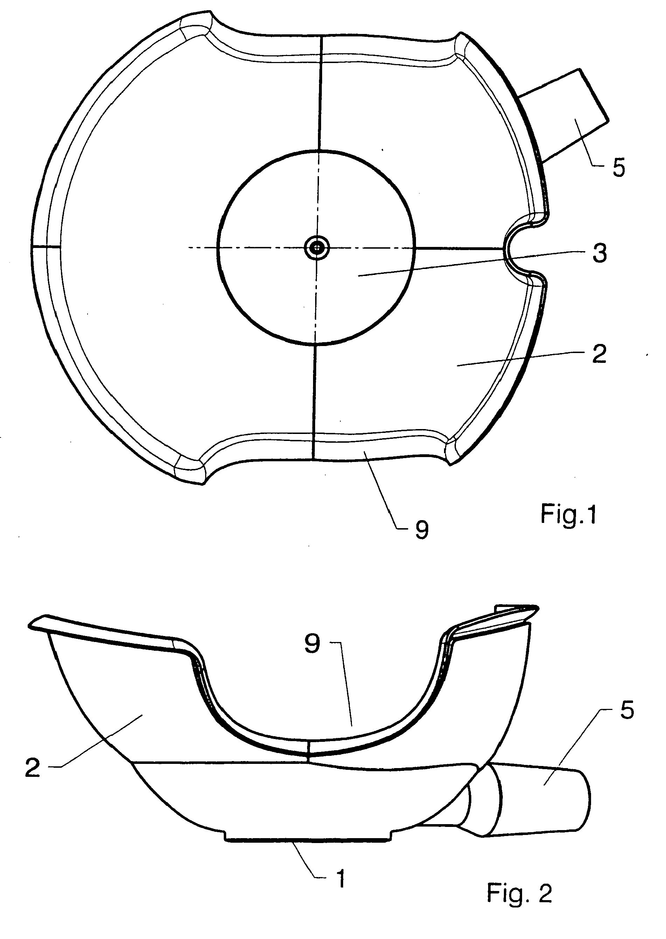

- Fig. 1: eine Draufsicht auf die Absaugwanne nach der Erfindung,
- Fig. 2: eine Seitenansicht auf den Gegenstand nach Figur 1,
- Fig. 3: eine der Figur 2 entsprechende Seitenansicht, jedoch um 90° gedreht,
- Fig. 4: einen Querschnitt durch den Gegenstand nach Figur 1.

Die in der Zeichnung dargestellte Absaugwanne ist vorgesehen für Werkstoffbearbeitungsmaschinen, insbesondere für eine in der Zeichnung nicht näher dargestellte Dentalfräsmaschine.

Die Absaugwanne ist mit einer Aufspannplatte 1 versehen, die zur Auflage und Befestigung auf dem Maschinentisch der Werkstoffbearbeitungsmaschine eingerichtet ist. Dies kann beispielsweise auf magnetischem Wege erfolgen; es sind jedoch auch sämtliche anderen Befestigungsarten denkbar. An die Aufspannplatte 1 ist eine Wanne 2 angeschlossen, in deren Innerem eine Auflageplatte 3 angeordnet ist, die - bei Verwendung der Absaugwanne - funktionell die Aufgabe des Maschinentisches der Werkzeugmaschine übernimmt.

Zwischen dem Boden der Wanne 2 und der Auflageplatte 3 ist ein Absaugspalt 4 gebildet, der mit einem an der Absaugwanne außenseitig angeordneten Absaugstutzen 5 in Verbindung steht. Dieser Absaugstutzen 5 dient zum Anschluß an eine Absaugeinrichtung.

Um einen möglichst einfachen Einsatz der Absaugwanne zu ermöglichen, ist die Auflageplatte 3 planparallel zur Aufspannplatte 1 ausgerichtet, so dass bei der Bearbeitung das Werkstück lediglich höhenverlagert wird.

Um das Absaugen von versehentlich in die Wanne 2 fallenden Teilen zu verhindern, ist der Absaugspalt 4 mit einem Trenngitter 6 versehen.

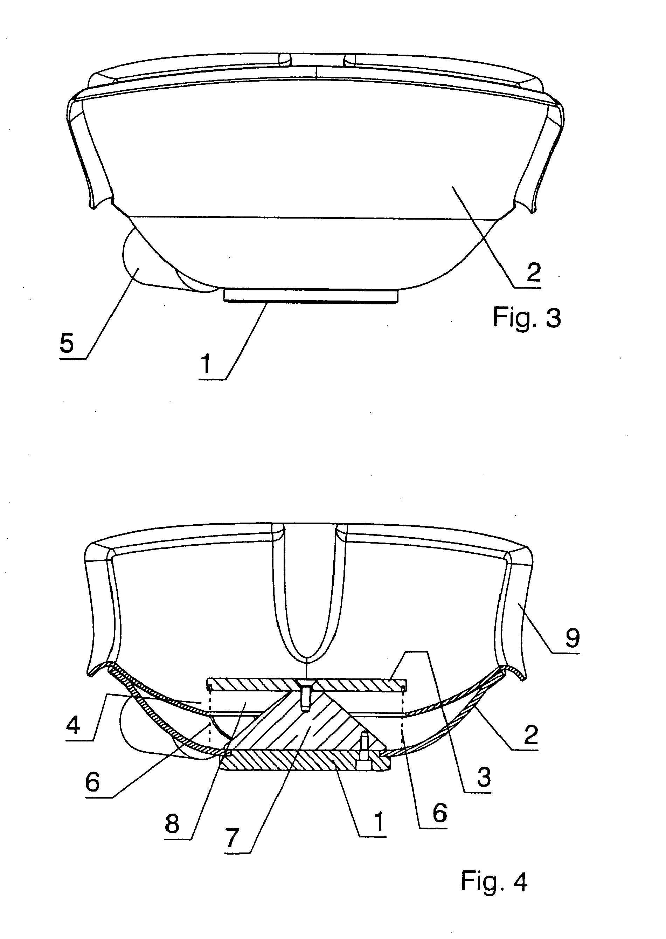

Wie sich aus der Figur 4 ersehen lässt, weist die Aufspannplatte 1 ein sich zur Auflageplatte hin konisch verjüngendes Distanzstück 7 auf, auf dem die Auflageplatte 3 befestigt ist. Hierdurch wir ein ringförmiger Absaugraum 8 gebildet, der für eine effektive Absaugung rings um die Auflageplatte 3 (ohne übermäßige Geräuschentwicklung) sorgt.

Weiter ist die Wanne 2 mit zwei eine Armmulde bildenden Randaussparungen 9 versehen, durch die die manuelle Bearbeitung und Handhabung des Werkstücks erleichtert werden.

An den Absaugstutzen 5 kann eine übliche Absaugeinrichtung angeschlossen werden, sofern diese für die Aufnahme von wasserhaltigem Absaugmaterial eingerichtet ist. Sollte dies nicht gegeben sein, kann - in in der Zeichnung nicht näher dargestellter Weise - ein Wasserabschneider vorgesehen sein, so dass dann auch übliche Absaugeinrichtungen verwendet werden können.

## Patentansprüche

1. Absaugwanne für Werkstoffbearbeitungsmaschinen, insbesondere für Dentalfräsgeräte, **gekennzeichnet durch** eine Aufspannplatte (1) zur Auflage und Befestigung auf dem Maschinentisch der Werkstoffbearbeitungsmaschine sowie **durch** eine an die Aufspannplatte (1) angeschlossene Wanne (2), in deren Innerem eine Auflageplatte (3) angeordnet ist, die funktionell die Aufgabe des Maschinentischs übernimmt, wobei zwischen dem Boden der Wanne (2) und der Auflageplatte (3) ein Absaugspalt (4) gebildet ist, der mit einem an der Absaugwanne außenseitig angeordneten, zum Anschluß an eine Absaugeinrichtung eingerichteten Absaugstutzen (5) in Verbindung steht.

2. Absaugwanne nach Anspruch 1, **dadurch gekennzeichnet, daß** die Auflageplatte (3) planparallel zur Aufspannplatte (1) ausgerichtet ist.

3. Absaugwanne nach Anspruch 1 oder 2, **dadurch gekennzeichnet, daß** der Absaugspalt (4) mit einem Trenngitter (6) versehen ist.

4. Absaugwanne nach einem der Ansprüche 1 bis 3, **dadurch gekennzeichnet, daß** die Aufspannplatte (1) ein sich zur Auflageplatte (3) hin konisch verjüngendes Distanzstück (7) aufweist, auf dem die Auflageplatte (3) befestigt ist und das einen ringförmigen Absaugraum (8) bildet.

5. Absaugwanne nach einem der Ansprüche 1 bis 4, **dadurch gekennzeichnet, daß** die Wanne (2) mit wenigstens einer eine Armmulde bildenden Randaussparung (9) versehen ist.

6. Absaugwanne nach einem der Ansprüche 1 bis 5, **dadurch gekennzeichnet, daß** zwischen dem Absaugstutzen (5) und der Absaugeinrichtung ein Wasserabscheider angeordnet ist.
